Europäisches Patentamt

European Patent Office

Office européen des brevets

(11) Numéro de publication: **0 466 086 A1**

# DEMANDE DE BREVET EUROPEEN

(21) Numéro de dépôt: **91111368.6**

(22) Date de dépôt: **08.07.91**

(51) Int. Cl.5: **F16L 27/047**, F16L 37/28

(30) Priorité: **09.07.90 FR 9008697**

(43) Date de publication de la demande:
**15.01.92 Bulletin 92/03**

(84) Etats contractants désignés:
**DE ES GB IT**

(71) Demandeur: **Gromelle, Raymond**
**Route de Corly, Vetraz-Monthoux**
**F-74100 Annemasse(FR)**

(72) Inventeur: **Gromelle, Raymond**
**Route de Corly, Vetraz-Monthoux**
**F-74100 Annemasse(FR)**

(74) Mandataire: **Kügele, Bernhard et al**
**c/o NOVAPAT-CABINET CHEREAU 9, Rue du**
**Valais**
**CH-1202 Genève(CH)**

(54) Coupleur pour conduits de fluide permettant l'accouplement automatique de deux pièces non-coaxiales.

(57) Un coupleur pour conduits de fluide qui comporte essentiellement une pièce mâle (1) et une pièce femelle (2) est agencé de façon à permettre un raccordement automatique même sous des conditions dans lesquelles la pièce mâle se trouve désaxée de la pièce femelle. La pièce femelle comporte un mécanisme permettant la compensation de ce désaxement.

La pièce femelle comporte une pièce de raccordement (10) et un ensemble de pièces de logement (6, 7, 8) qui maintient une douille de couplage (5) de façon à ce que cette douille de couplage (5) puisse être articulée à l'intérieur de l'ensemble des pièces de logement et ce dernier peut être déplacé dans une direction perpendiculaire à l'axe du coupleur par rapport à la pièce de raccordement.

On connait un grand nombre de coupleurs pour des conduites de fluide gazeux ou liquide, sous pression élevée ou ambiante qui permettent un accouplement des deux parties d'un conduit soit manuellement ou automatiquement. L'orientation des deux extrémités libres des parties de conduite à accoupler peut être facilement obtenue par l'opération manuelle alors que pour un accouplement automatique, il est nécessaire d'aligner les deux pièces à accoupler sur le même axe avant d'effectuer l'accouplement.

Cet alignement sur le même axe était effectué selon l'art antérieur par des moyens de guidage fixés sur l'un ou l'autre ou bien sur les deux pièces à accoupler, ce qui était relativement encombrant et insatisfaisant en ce qui concerne la fiabilité à long terme car les guides qui ramenaient les deux pièces sur le même axe étaient soumis fréquemment aux déformations suite à des impacts fréquents.

En plus un système d'accouplement qui travaille selon le principe de ramener les deux parties à accoupler sur le même axe ne peut pas être utilisé dans certaines conditions, notamment pour l'accouplement des pièces qui sont maintenues de façon rigide sur des composants de machines ayant un poids élevé ou étant guidés eux-mêmes sur un rail. Dans de pareilles conditions peut se produire une excentricité des deux pièces à accoupler, excentricité qui doit être compensée par des moyens autres qu'un alignement forcé des deux pièces lors de l'accouplement.

Le but de la présente invention est donc de créer un coupleur qui permet un accouplement des deux pièces dans une position non-coaxiale ou dans des positions dans lesquelles les axes des deux pièces ne sont pas parallèles.

Un autre but de la présente invention est de créer un coupleur qui permet une articulation relative entre les deux pièces accouplées.

Conformément à la présente invention, ce but est atteint par un coupleur du type mentionné ci-dessus qui comporte en outre les particularités mentionnées dans la partie caractérisante de la revendication 1.

Le coupleur pour conduit de fluide selon la présente invention comporte une pièce mâle et une pièce femelle destinée à recevoir la pièce mâle de façon essentiellement axiale, les deux pièces mâle et femelle comportant chacune un alésage axial destiné à l'écoulement du fluide lorsque les pièces sont accouplées, la pièce femelle comportant un ensemble femelle et une douille de couplage qui est tenue à l'ensemble femelle de façon à permettre à la douille un déplacement limité par rapport à l'ensemble femelle dans une direction perpendiculaire à l'axe dudit ensemble femelle ainsi qu'une articulation relative entre l'ensemble femelle et la douille, ledit mouvement et ladite articulation pouvant être effectués dans un sens radial quelconque autour de l'axe de l ensemble femelle.

Selon une réalisation particulière de la présente invention, la douille de couplage et l'ensemble femelle comportent des surfaces sphériques sectorielles qui sont orientées de façon que la surface sphérique de la douille glisse sur la surface sphérique de l'ensemble femelle lors d'une articulation de la douille par rapport à l'ensemble femelle.

L'ensemble femelle peut comporter une pièce de raccordement ainsi qu'un ensemble de pièces de logement pour la douille, ledit ensemble étant fixé sur la pièce de raccordement de façon à permettre son déplacement dans un sens perpendiculaire à l'axe de la pièce de raccordement.

Selon une forme d'exécution particulière de l'invention, l'ensemble des pièces de logement peut comporter un cylindre de logement à l'intérieur duquel est arrangée au moins une partie de la douille de couplage.

En outre, l'ensemble des pièces de logement peut comporter un cylindre extérieur qui est maintenu dans une position axiale fixe par rapport à la pièce de raccordement ainsi que par rapport au cylindre de logement, toutefois d'une façon permettant un déplacement perpendiculaire à l'axe par rapport à la pièce de raccordement.

De façon avantageuse, une pièce d'étanchéité peut être arrangée axialement entre la pièce de raccordement et la douille de couplage et à l'intérieur du cylindre de logement.

Cette pièce d'étanchéité peut comporter deux logements pour des anneaux d'étanchéité en matériau flexible, dont le premier anneau d'étanchéité peut être arrangé entre une face frontale de la pièce de raccordement et la pièce d'étanchéité et le deuxième anneau d'étanchéité peut être arrangé entre la pièce d'étanchéité et la douille de couplage.

Dans ce cas, le deuxième anneau d'étanchéité peut être arrangé entre la pièce d'étanchéité et la douille de couplage au niveau d'une rainure annulaire pratiquée dans une surface annulaire sphérique de la pièce d'étanchéité qui oppose une des surfaces sphériques sectorielles de la douille de couplage.

Le cylindre de logement peut comporter un filetage extérieur par lequel il est vissé dans un cylindre extérieur qui porte un filetage intérieur correspondant. Le cylindre de logement, une fois vissé à l'intérieur du cylindre extérieur, peut être bloqué dans une position désirée par une bague de verrouillage qui est vissée également dans le cylindre extérieur de façon à suivre le cylindre de logement.

Cette bague de verrouillage peut comporter au moins un alésage parallèle à l'axe et destiné à recevoir un vis pointeau dont la pointe peut être insérée dans un d'une pluralité de trous pratiqués dans la surface du cylindre de logement qui s'oppose à la bague de verrouillage.

La bague de verrouillage peut comporter sur sa surface intérieure une surface annulaire sphérique qui s'appuie sur une surface sphérique sectorielle de la douille de couplage de façon à ce que le vissage de la bague de verrouillage dans le cylindre extérieur maintient en contact la surface sphérique de la pièce d'étanchéité avec l'une des surfaces sphériques de la douille ainsi que l'autre surface surface sphérique de la douille avec celle de la bague de verrouillage respectivement.

Selon une forme de réalisation préférée, le cylindre de logement et une partie de la douille de couplage qui est arrangée à l'intérieur de ce cylindre sont mécaniquement reliés par une pièce élastique de façon à former un silentbloc, permettant une certaine articulation relative entre le cylindre de logement et la douille.

Le cylindre extérieur peut comporter une partie annulaire à diamètre intérieur réduit et la pièce de raccordement de la pièce femelle peut comporter une partie frontale à diamètre extérieur élargi et supérieur au diamètre intérieur de la partie annulaire du cylindre extérieur, la pièce de raccordement après insertion dans le cylindre extérieur étant positionnée de façon à faire saillir sa partie à diamètre inférieur axialement vers l'extérieur de la partie annulaire du cylindre extérieur de sorte que le vissage de la bague de verrouillage dans le cylindre extérieur à partir de l'extrémité de ce cylindre opposée à l'extrémité à laquelle se trouve la partie annulaire, sollicite la partie à diamètre élargi de la pièce de raccordement contre la partie annulaire du cylindre extérieur.

Afin de servir dans des conditions où l'on cherche à éviter l'introduction d'air dans les fluides lors de l'accouplement des deux pièces ou une perte de liquide lors de cet accouplement le coupleur selon la présente invention peut comporter un clapet d'étanchéité dans chacune des pièces mâle et femelle.

Ces deux clapets peuvent comporter chacun une tige de clapet ayant chacune une surface frontale plane. Ces surfaces sont sollicitées l'une contre l'autre lors du rapprochement des deux pièces mâle et femelle afin d'ouvrir les clapets lors de cet accouplement.

Selon une forme particulière de la présente invention, la tige du clapet de la pièce femelle peut être axialement fixe par rapport à la pièce femelle alors que la tige de clapet de la pièce mâle peut être capable de reculer par rapport à la pièce mâle sous la force exercée par la tige de clapet de la pièce femelle lors de l'accouplement.

La tige de clapet de la pièce femelle peut comporter une douille de fermeture arrangée autour de cette tige, douille qui est déplaçable par rapport et sur ladite tige de façon à pouvoir fermer et ouvrir des ouvertures d'écoulement du fluide pratiquées dans la tige.

Cette douille de fermeture peut être sollicitée par un ressort vers une position dans laquelle les ouvertures d'écoulement sont fermées et, lors du couplage, elle peut être ramenée, par une partie cylindrique frontale de la pièce mâle, dans une position dans laquelle les ouvertures d'écoulement sont dégagées.

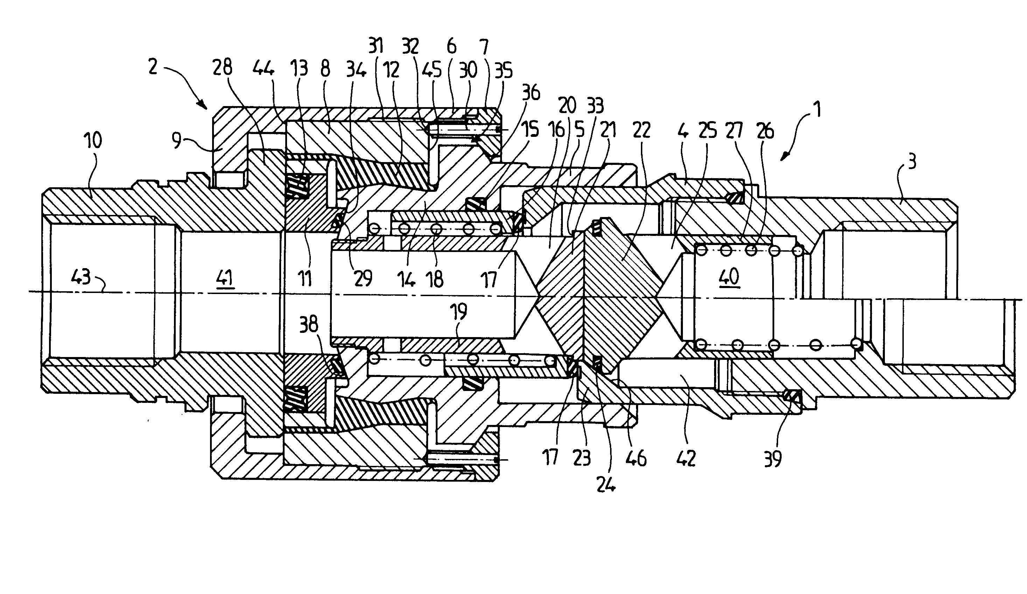

L'invention va maintenant être décrite plus en détail en se référant à la figure unique qui montre une section axiale du coupleur selon la présente invention, la partie supérieure de cette figure montrant les deux pièces mâle et femelle dans l'état accouplé, alors que sa partie inférieure montre le même coupleur dans une position dans laquelle la pièce mâle est légèrement introduite dans la pièce femelle jusqu'à une position avant l'actionnement des clapets.

En se référant à la figure unique, le coupleur selon la présente invention comporte une pièce mâle 1 et une pièce femelle 2. La pièce mâle est constituée d'une pièce de raccordement 3 sur laquelle est partiellement télescopé un corps mâle 4, qui est vissé sur une partie frontale de la pièce de raccordement 3, un anneau d'étanchéité 39 étant arrangé entre ces deux éléments afin de garantir une étanchéité de l'alésage axial 40 de la pièce mâle vers l'extérieur.

A l'intérieur dudit alésage 40 se trouve un clapet d'étanchéité 27, qui comporte une partie frontale 22 ayant une surface frontale plane et un anneau d'étanchéité 24 qui s'appuie contre une surface conique intérieure de la partie frontale 23 du corps mâle 4. L'appui de l'anneau d'étanchéité 24 sur cette surface conique est supporté par la force d'un ressort 26 qui sollicite le clapet 27 et sa tête 22 dans le sens où la tête 22 et l'anneau d'étanchéité 24 ferment l'alésage axial 40 de la pièce mâle.

La pièce femelle comporte une pièce de raccordement 10 et un ensemble de pièces de logement qui est constitué par un cylindre extérieur 6, un cylindre de logement 8, une pièce d'étanchéité 11, et une bague de verrouillage 7 qui sont arrangés de façon à former un logement pour une douille de couplage 5 de façon à permettre un déplacement perpendiculaire à l'axe 43 du coupleur. Le cylindre de logement 8 et la partie intérieure 14 de la douille de couplage 5 sont mécaniquement reliés l'un à l'autre par un anneau en caoutchouc 12, de façon à former un silentbloc, qui permet par la compression ou déformation du caoutchouc 12, une certaine liberté d'action de la douille de couplage 5 par rapport au cylindre de logement 8.

En outre, le cylindre extérieur 6 comporte une partie annulaire 9 qui s'engage avec une partie à diamètre extérieur élargi 28 de la pièce de raccordement 10 de façon à maintenir la partie à diamètre élargi 28 à l'intérieur du cylindre extérieur 6. Le cylindre de logement 8 est vissé dans le cylindre extérieur 6 au moyen d'un filetage correspondant 31, et la bague de verrouillage 7 est vissée dans le cylindre extérieur 6 de façon à suivre le cylindre de logement 8 et de le bloquer dans une position finale dans laquelle elle aboute sur une épaule 44 pratiquée sur la surface intérieure du cylindre extérieur 6. La distance axiale entre la surface intérieure de la partie annulaire 9 et de l'épaule 44 du cylindre extérieur 6 correspond sensiblement à l'épaisseur axiale de la partie à diamètre élargi 28 de la pièce de raccordement 10 et permet un glissement relatif dans un sens perpendiculaire à l'axe 43 de la partie à diamètre élargi 28 entre les surfaces radiales de la partie annulaire 9 et du cylindre de logement 8 qui opposent ladite partie à diamètre élargi 28.

De cette façon, une force radiale exercée sur la partie frontale de la douille de couplage 5 lors de l'introduction de la pièce mâle produit un déplacement radial de ladite douille de déplacement 5 ensemble avec tous les éléments qui constituent l'ensemble des pièces de logement.

La partie 14 de la douille de couplage 5 qui se trouve à l'intérieur de l'ensemble des pièces de logement comporte une première surface sphérique sectorielle 36 qui s'appuie sur une surface sphérique sectorielle 35 de la bague de verrouillage 7, et une deuxième surface sphérique sectorielle 34 qui s'appuie sur une surface sphérique sectorielle 38 de la pièce d'étanchéité 11.

La surface sphérique 38 comporte une rainure annulaire qui loge un anneau d'étanchéité 29 de façon à ce que l'interface entre les surfaces sphériques 34 et 38 soit étanche. De cette façon l'anneau en caoutchouc 12 n'est pas mis sous la pression du fluide qui traverse les alésages axiaux 40 et 41 et l'adhésion du caoutchouc 12 sur les surfaces respectives du cylindre de logement 8 et de la partie 14 de la douille de couplage 5 n'est pas soumis à des contraintes exercées par une telle pression.

La pièce d'étanchéité 11 comporte une deuxième rainure annulaire qui loge un deuxième anneau d'étanchéité 13 par lequel l'interface entre la pièce d'étanchéité 11 et la pièce de raccordement 10 est rendue étanche envers l'extérieur. L'anneau d'étanchéité 13 est exécuté avantageusement comme quadring pour optimaliser l'étanchéité entre ces deux pièces.

Le cylindre de logement 8 comporte sur une partie circonférentielle de sa surface radiale 45, une pluralité de trous superficiels et la bague de verrouillage 7 comporte des vis pointaux dont les pointes 32 s'engagent dans les trous superficiels du cylindre de logement 8 afin de produire un blocage de ce cylindre contre une rotation qui aurait comme effet une libération du contact étanche entre la pièce d'étanchéité 11 et la pièce de raccordement 10.

Lors de l'assemblage de la pièce femelle, le silentbloc 5, 8, 12 muni de la pièce d'étanchéité 11 est vissé dans le cylindre extérieur 6 et capturé à l'intérieur de celui-ci par la bague de verrouillage 7 qui est serrée d'abord jusqu'à l'aboutement simultané des surfaces sphériques sectorielles 35 et 36 ainsi que des surfaces 34 et 38 respectivement et ensuite la bague de verrouillage est légèrement tournée dans le sens contraire jusqu'à ce que les vis pointeaux 30 trouvent le premier trou superficiel pratiqué sur la partie circonférentielle de la surface radiale 45 de ce cylindre. De cette façon, on crée une tolérance suffisante pour permettre à la douille de couplage 5 une articulation par rapport à l'ensemble des pièces de logement comme recherché par la présente invention.

Le clapet d'étanchéité 19 de la pièce femelle comporte une partie cylindrique et une tête 21 à surface frontale plate ainsi qu'une douille de fermeture 16 qui est sollicitée par un ressort 18 vers une position dans laquelle l'anneau d'étanchéité 17 qui est fixé sur la face frontale de la douille 16 aboutit sur l'épaule 33 de la tête de clapet 21.

Dans cette position qui est illustrée dans la partie inférieure de la figure, la douille 16 ferme des conduites 20 qui permettent, dans l'état de leur ouverture, la communication entre l'alésage axial 41 et l'espace 42 qui entourent la tige de clapet 27 de la pièce mâle.

Un anneau d'étanchéité 15 est prévu entre la surface extérieure de la douille de fermeture 16 et la surface intérieure de la partie 14 de la douille de couplage 5.

Lors du raccordement des pièces mâle et femelle par l'introduction du corps mâle 4 dans la douille de couplage 5, on progresse dans une phase initiale jusqu'à la position illustrée dans la partie inférieure de la figure, c'est-à-dire jusqu'à la position dans laquelle la partie frontale 23 du corps mâle 4 s'appuie contre l'anneau d'étanchéité 17 de la douille de fermeture 16. A ce stade-là, le clapet 27 de la pièce mâle est maintenu dans sa position de fermeture par l'aboutement de la tête 22 et de l'anneau d'étanchéité 24 sur la surface conique intérieure 46 de la partie frontale 23 du corps mâle 4 et le clapet d'étanchéité 19 est fermé par l'aboutement de l'anneau d'étanchéité 17 contre l'épaule 33 de la tête 21 du clapet 19.

Lors de la continuation de l'introduction du corps mâle 4 dans la douille de couplage 5, la douille de fermeture 16 est poussée par la partie frontale 23 du corps 24 dans la direction de l'introduction du corps mâle en ouvrant graduellement les alésages 20 et en même temps la tête 22 du clapet 27 de la pièce mâle qui est maintenu dans la position illustrée en s'appuyant sur la tête 21 du clapet 19 qui est maintenue dans une position axiale fixe par rapport à la pièce femelle se dégage de la surface conique 46 de la partie frontale 23 du corps mâle 4 de façon à ouvrir la communication entre l'espace 42 à l'intérieur du corps mâle 4 et entre les alésages 20 du clapet 19.

L'état de l'ouverture des deux clapets lors d'une introduction plus ou moins complète de la pièce mâle dans la pièce femelle est illustré dans la partie supérieure de la figure, dans laquelle une communication fluide à partir de l'alésage axial 40 en passant par les alésages 25, l'espace 42, les alésages 20 jusqu'aux alésages 41 est libérée afin de permettre l'écoulement du fluide.

Dans l'état accouplé des pièces mâle et femelle, une articulation relative entre ces deux pièces est permise par un certain degré de liberté de mouvement de la douille de couplage 5 à l'intérieur de l'ensemble des pièces de logement, mouvement qui est guidé par le glissement des surfaces sphériques sectorielles 35, 36 et 34, 38 respectivement.

Un couplage automatique sous des conditions dans lesquelles la pièce mâle se trouve désaxée par rapport à la pièce femelle est possible dans la mesure où le désaxement ne dépasse pas une limite déterminée par le degré de mouvement radial possible entre l'ensemble des pièces de logement et la pièce de raccordement 10, mouvement libre dont le degré est déterminé par le jeu axial entre la pièce de raccordement 10 et le cylindre extérieur 6. Ce jeu peut être dimensionné selon les besoins de l'application particulière du raccord selon la présente invention.

La pièce mâle peut être fixée à l'intérieur de la pièce femelle par un moyen connu tel qu'un jeu de billes radialement déplaçable et une bague de verrouillage qui maintient ces billes dans une position radialement intérieure pour bloquer la pièce mâle, ou pour certaines applications notamment pour le raccordement de deux composantes portant les pièces mâle et femelle respectivement, le verrouillage de pièces dans leur position accouplée peut être effectué au niveau du positionnement des ces composantes elles-mêmes.

L'invention a été décrite en se référant à un exemple de description sans pour autant être limitée aux détails de l'illustration de cet exemple.

**Revendications**

1. Coupleur pour conduit de fluide comportant une pièce mâle (1) et une pièce femelle (2) destinée à recevoir la pièce mâle (1) de façon essentiellement parallèle, les deux pièces mâle et femelle comportant chacune un alésage axial (40, 41) destiné à l'écoulement du fluide lorsque les pièces (1, 2) sont accouplées, caractérisé en ce que la pièce femelle (2) comporte un ensemble femelle et une douille de couplage (5) qui est fixée à l'ensemble femelle de façon à permettre à la douille (5) un déplacement limité par rapport à l'ensemble femelle dans une direction perpendiculaire à l'axe (43) dudit ensemble femelle ainsi qu'une articulation relative entre l'ensemble femelle et la douille (5), ledit mouvement et ladite articulation pouvant être effectués dans un sens radial quelconque autour de l'axe (43) de l'ensemble femelle.

2. Coupleur selon la revendication 1, caractérisé en ce que la douille (5) et l'ensemble femelle comportent des surfaces sphériques sectorielles (34, 35, 36, 38), qui sont orientés de façon à ce que les surfaces sphériques de la douille (5) glissent sur les surfaces sphériques de l'ensemble femelle lors d'une articulation de la douille par rapport à l'ensemble femelle.

3. Coupleur selon la revendication 1 ou 2, caractérisé en ce que l'ensemble femelle comporte une pièce de raccordement (10) ainsi qu'un ensemble de pièces de logement pour la douille (5), ledit ensemble des pièces de logement étant fixé sur la pièce de raccordement (10) de façon à permettre son déplacement dans un sens perpendiculaire à l'axe (43) de la pièce de raccordement (10).

4. Coupleur selon l'une quelconque des revendications 1 à 3, caractérisé en ce que l'ensemble des pièces de logement comporte un cylindre de logement (8) à l'intérieur duquel est arrangé au moins une partie (14) de la douille de couplage (5).

5. Coupleur selon la revendication 4, caractérisé en ce que l'ensemble des pièces de logement comporte en outre un cylindre extérieur (6) qui est maintenu en une position axiale fixe par rapport à la pièce de raccordement (10) ainsi que par rapport au cylindre de logement (8), toutefois d'une façon à permettre un déplacement perpendiculaire à l'axe (43) par rapport à la pièce de raccordement (10).

6. Coupleur selon la revendication 5, caractérisé en ce qu'une pièce d'étanchéité (11) est arrangée axialement entre la pièce de raccordement (10) et la douille de couplage (5) et à l'intérieur du cylindre de logement (8).

7. Coupleur selon la revendication 6, caractérisé en ce que la pièce d'étanchéité (11) porte deux logements pour deux anneaux d'étanchéité (29, 13) en matériau flexible, le premier anneau d'étanchéité (13) étant arrangé entre une face frontale de la pièce de raccordement (10) et la pièce d'étanchéité (11), et le deuxième anneau d'étanchéité (29) étant arrangé entre la pièce d'étanchéité (11) et la douille de couplage (5).

8. Coupleur selon la revendication 7, caractérisé en ce que le deuxième anneau d'étanchéité (29) qui est arrangé entre la pièce d'étanchéité (11) et la douille de couplage (5) est situé dans une rainure annulaire pratiquée dans une surface annulaire sphérique (38) de la pièce d'étanchéité (11) qui oppose la surface sphérique sectorielle (34) de la douille de couplage (5).

9. Coupleur selon l'une quelconque des revendications 5 à 8, caractérisé en ce que le cylindre de logement (8) comporte un filetage extérieur (31) par lequel il est vissé dans le cylindre extérieur (6) qui porte un filetage intérieur.

10. Coupleur selon la revendication 9, caractérisé en ce qu'une bague de verrouillage (7) est vissée dans le cylindre extérieur (6) suivant le cylindre de logement (8) afin de bloquer celui-ci dans une position déterminée.

11. Coupleur selon la revendication 10, caractérisé en ce que la bague de verrouillage (7) comporte au moins un alésage parallèle à l'axe et destiné à recevoir un vis pointeau (30) dont la pointe (32) peut être insérée dans un d'une pluralité de trous pratiqués dans une surface (45) du cylindre de logement (8) qui s'oppose à la bague de verrouillage (7).

12. Coupleur selon la revendication 10 ou 11, caractérisé en ce que la bague de verrouillage (7) comporte, sur sa partie intérieure, une surface annulaire sphérique (35) qui s'appuie sur une surface sphérique sectorielle (36) de la douille de couplage (5) de façon à ce que le vissage de la bague de verrouillage (7) dans le cylindre extérieur (6) maintienne en contact la surface sphérique (38) de la pièce d'étanchéité (11) avec la surface sphérique (34) de la douille de couplage (5) ainsi que l'autre surface sphérique (36) de la douille (5) avec la surface sphérique (35) de la bague de verrouillage (7) respectivement.

13. Coupleur selon l'une quelconque des revendications 4 à 12, caractérisé en ce que le cylindre de logement (8) et la partie (14) de la douille de couplage qui est arrangée à l'intérieur du cylindre de logement (8) sont mécaniquement reliés par une pièce élastique (12) de façon à former un silentbloc, permettant une certaine articulation relative entre le cylindre de logement (8) et la douille (5).

14. Coupleur selon l'une des revendications 5 à 13, caractérisé en ce que le cylindre extérieur (6) comporte une partie annulaire (9) à diamètre intérieur réduit et la pièce de raccordement (10) de la pièce femelle comporte une partie frontale (28) à diamètre extérieur élargi et supérieur au diamètre intérieur de la partie annulaire (9) du cylindre extérieur (6), la pièce de raccordement (10), après insertion dans le cylindre extérieur (6) étant positionnée de façon à faire saillir sa partie à diamètre inférieur axialement vers l'extérieur de la partie annulaire (9) du cylindre extérieur (6) de sorte que le vissage de la bague de verrouillage (7) dans le cylindre extérieur (6) à partir de l'extrémité de ce cylindre opposée à l'extrémité à laquelle se trouve la partie annulaire (9) sollicite la partie à diamètre élargi (28) de la pièce de raccordement (10) contre la partie annulaire (9) du cylindre extérieur (6).

15. Coupleur selon l'une quelconque des revendications précédentes caractérisé en ce que la pièce mâle (1) et la pièce femelle (2) comporte chacune un clapet d'étanchéité (27, 19).

16. Coupleur selon la revendication 15, caractérisé en ce que les deux clapets (27, 19) comportent chacun une tige de clapet ayant chacune une surface frontale plane.

17. Coupleur selon la revendication 16, caractérisé en ce que lors du couplage des pièces mâle (1) et femelle (2) les deux tiges de clapet sont sollicitées axialement l'une contre l'autre de façon à les ouvrir.

18. Coupleur selon la revendication 17, caractérisé en ce que la tige de clapet (19) de la pièce femelle (2) est axialement fixée par rapport à la pièce femelle alors que la tige de clapet (27) de la pièce mâle est destinée à pouvoir reculer par rapport à la pièce mâle sous la force exercée par la tige de clapet de la pièce femelle lors du couplage.

19. Coupleur selon la revendication 18, caractérisé en ce que la tige de clapet (19) de la pièce femelle (2) comporte une douille de fermeture (16) arrangée autour de la tige et qui est déplaçable axialement par rapport et sur ladite tige de façon à pouvoir fermer ou ouvrir des ouvertures (20) d'écoulement du fluide pratiqué dans la tige du clapet (19).

20. Coupleur selon la revendication 19, caractérisé en ce que la douille de fermeture (16) est sollicitée par un ressort (18) dans une position dans laquelle les ouvertures d'écoulement (20) sont fermées et qu'elle est susceptible, lors du couplage, d'être ramenée par une partie frontale (23) de la pièce mâle dans une position dans laquelle les ouvertures d'écoulement (20) sont dégagées.

**Office européen
des brevets**

Numéro de la demande

**RAPPORT DE RECHERCHE
EUROPEENNE**

**EP 91 11 1368**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 899 792   (PODGERS)<br>* figures 2, 2a * | 1-4,12, 15-17 | F 16 L 27/047<br>F 16 L 37/28 |
| | — — — | | |
| A | US-A-2 005 556   (PARKER)<br>* figure 1 * | 1-3,15 | |
| | — — — | | |
| A | US-A-3 332 709   (KOWALSKI)<br>* figure 7 * | 5-7 | |
| | — — — | | |
| A | GB-A-959 603   (OLIN MATHIESON)<br>* figure 1 * | 8 | |
| | — — — | | |
| A | DE-C-497 482   (GYÖRFFY-WOLF)<br>* figure 1 * | 10 | |
| | — — — | | |
| A | FR-A-582 303   (DIAMOND METAL PRODUCTS)<br>* figure 2 * | 11 | |
| | — — — | | |
| A | DE-B-1 034 431   (RHEINSTAHL WANHEIM)<br>* figure 1 * | 13 | |
| | — — — | | **DOMAINES TECHNIQUES RECHERCHES (Int. Cl.5)** |
| A | DE-A-1 913 334   (GUIOT ET CIE)<br>* figure 1 * | 18-20 | F 16 L |
| | — — — — — | | |

**Le présent rapport de recherche a été établi pour toutes les revendications**

| Lieu de la recherche | Date d'achèvement de la recherche | Examinateur |
|---|---|---|
| Berlin | 01 octobre 91 | SCHLABBACH M |